Europäisches Patentamt

European Patent Office

Office européen des brevets

(11) Veröffentlichungsnummer: **0 184 199**
**A1**

## EUROPÄISCHE PATENTANMELDUNG

(21) Anmeldenummer: 85115377.5

(22) Anmeldetag: 04.12.85

(51) Int. Cl.⁴: **A 47 J 27/00**
A 47 J 27/21, B 21 D 51/34

(30) Priorität: 05.12.84 DE 3444263

(43) Veröffentlichungstag der Anmeldung:
11.06.86 Patentblatt 86/24

(84) Benannte Vertragsstaaten:
BE DE GB NL

(71) Anmelder: Vandaele, Stephan
Zeedijk het Zoute 843 Bus 22
B-8300 Knokke-Heist(BE)

(72) Erfinder: Vandaele, Stephan
Zeedijk het Zoute 843 Bus 22
B-8300 Knokke-Heist(BE)

(74) Vertreter: Hassler, Werner, Dr.
Postfach 17 04 Asenberg 62
D-5880 Lüdenscheid(DE)

(54) Wasserkessel.

(57) Ein Wasserkessel mit einer Bodenplatte und einem Mantel, dessen Unterrand zusammen mit dem Rand der Bodenplatte eine Bördelverbindung bildet. Das technische Problem der Erfindung ist eine solche Ausbildung eines Wasserkessels, daß der Mantel einen glatten Abschluß bis zum Unterrand aufweist, der nicht durch Faltungen oder dergleichen gestört ist. Der Unterrand (7) des Mantels (2) greift mit einem etwa um 90° umgebogenen Streifen (10) über den um 180° umgebogenen Rand (8) der Bodenplatte (3) und liegt mit seiner weiter um 180° umgebogenen Endleiste (11) in dem durch den umgebogenen Rand (8) der Bodenplatte (3) gebildeten Schlitz (9).

Fig. 3

Croydon Printing Company Ltd.

Haßler, Werner, Dr.

Patentanwalt

Asenberg 62

D-5880 Lüdenscheid (DE)

0184199

30. September 1985

A 85 132

Anmelder: Vandaele, Stephan

     Zeedijk het Zoute 843, Bus 22

     B-8300 Knokke-Heist (BE)

## Wasserkessel

### Beschreibung

Die Erfindung betrifft einen Wasserkessel mit einer Bodenplatte und einem Mantel, dessen Unterrand zusammen mit dem Rand der Bodenplatte eine Bördelverbindung bildet.

Bei einem bekannten Wasserkessel dieser Art ist der Unterrand der Bodenplatte nach außen über eine Umfaltung des Unterrand des Mantels eingerollt, so daß die Bördelnaht am Unterende der Mantelaußenseite liegt. Dieses ist einerseits optisch störend und stellt andererseits eine Sammelstelle für Schmutz und dergleichen dar, die sich schlecht reinigen läßt.

Das DE-U-6 906 348 beschreibt einen Wasserkessel, bei dem eine Bodenplatte wesentlich stärkerer Dicke als der Mantel über den Umfang des Mantels übersteht. Der Mantel ist über einen Rand der Bodenplatte gefaltet. Auch hier ist der vorstehende Rand der Bodenplatte störend und stellt eine Schmutzsammelstelle dar.

Bekannt ist auch die Verbindung der Bodenplatte mit dem Mantel eines Wasserkessels durch eine Rollnahtschweißung. Hier ist eine umfangreiche Nacharbeit erforderlich, da die Schweißnaht abgeschliffen werden muß.

Aufgabe der Erfindung ist eine solche Ausbildung eines Wasserkessels, daß der Mantel einen glatten Abschluß bis zum Unterrand aufweist, der nicht durch Faltungen oder dergleichen gestört ist.

Diese Aufgabe wird nach der Erfindung dadurch gelöst, daß der Unterrand des Mantels mit einem etwa um 90° umgebogenen Streifen über den um 180° umgebogenen Rand der Bodenplatte greift und mit seiner weiter um 180° umgebogenen Endleiste in dem durch den umgebogenen Rand der Bodenplatte gebildeten Schlitz liegt.

Der Wasserkessel nach der Erfindung unterscheidet sich dadurch in nicht naheliegender Weise vom Stand der Technik, als der Unterrand des Mantels auf die Unterseite der Bodenplatte umgefaltet ist und als dort eine doppelte Bördelnaht gebildet ist, die eine ausreichende Dichtigkeit gewährleistet. Der Mantel des Wasserkessels geht bis zum Unterrand glatt und ununterbrochen durch und umgreift den Rand der Bodenplatte, so daß ein gutes optisches Aussehen gewährleistet ist. Es sind auf der Außenseite des Mantels keine Ränder und Hohlkanten vorhanden, in denen sich Schmutz ansammeln kann oder die bei der Handhabung des Wasserkessels störend sind, indem der Wasserkessel daran hängenbleiben kann. Die Umbiegung des Mantels auf die Bodenplatte ist zwar schwierig, weil die Stützrollen nicht im Außenraum des Wasserkessels angeordnet werden können. Es ist jedoch möglich, die Stützrollen im Inneren des Wasserkessels anzuordnen und die Bodenplatte an ihrem Rand von innen abzustützen, so daß die Bördelung sicher und fachgerecht durchgeführt werden kann.

Eine Ausführungsform der Erfindung wird im folgenden unter Bezugnahme auf die anliegenden Zeichnungen erläutert, in denen darstellen:

Fig. 1 eine teilweise aufgebrochene Gesamtansicht eines Wasserkessels nach der Erfindung,

Fig. 2 einen vergrößerten Schnitt durch den Verbindungsbereich zwischen Mantel und Bodenplatte vor der Bördelung und

Fig. 3 einen entsprechenden Schnitt durch die fertige Bördelverbindung.

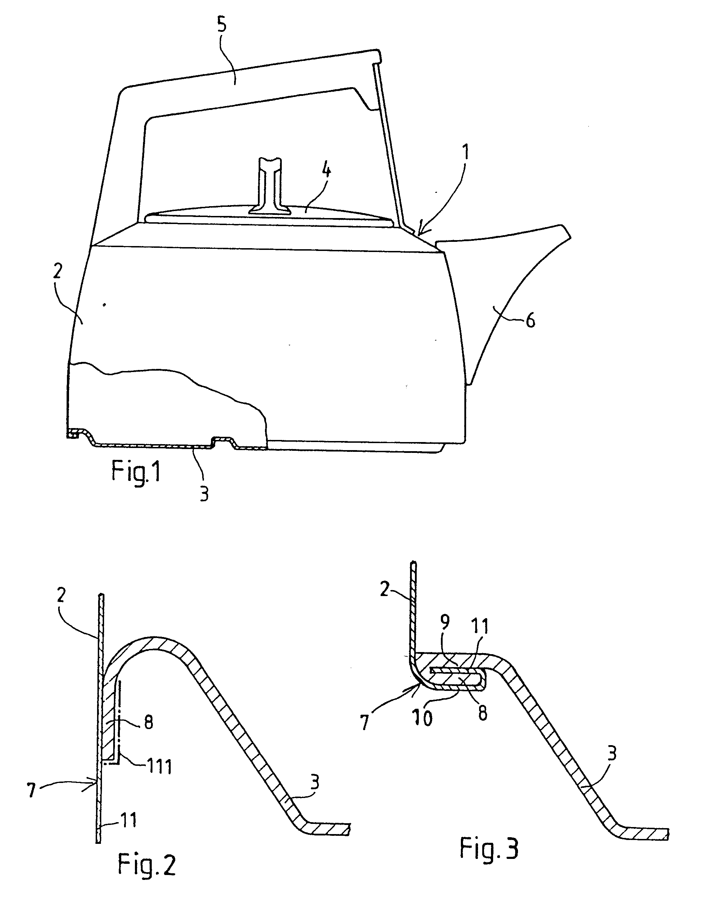

Der in Fig. 1 dargestellte Wasserkessel 1 umfaßt einen geformten, im wesentlichen zylindrischen Mantel 2, eine Bodenplatte 3, einen Deckel 4, einen Griff 5 und einen Ausgießer 6. Der Mantel 2 ist normalerweise ein tiefgezogenes, einstückiges Blechteil. Die Bodenplatte 3 kann eine größere Dicke als der Mantel haben. Dieses ist jedoch nicht notwendig oder wesentlich. Die Bodenplatte 3 kann konzentrische Rillen besitzen, die einerseits zur Verstärkung und andererseits zur Verbesserung der Standfestigkeit oder Auflage des Wasserkessels 1 dienen.

Der Mantel 2 endet in vorgefertigtem Zustand in einen zylindrischen Unterrand 7. Die Bodenplatte 3 endigt am Umfang in einen etwa rechtwinklig abgebogenen Rand 8, der somit eine Zylindermantelform hat. Zum Zusammenfügen des Mantels 2 mit der Bodenplatte 3 werden die Teile in der aus Fig. 2 ersichtlichen Weise zusammengefügt, wobei eine Endleiste 11 des Mantels 2 über der Rand 8 der Bodenplatte 3 übersteht. Mittels einer Bördelrolle wird die Endleiste 11 zunächst

0184199

in die in strichpunktierten Linien eingezeichnete Stellung 111 um
180° um den Rand 8 der Bodenplatte 3 gefaltet. Dabei wird der Innenrand der Bodenplatte durch eine Stützrolle abgestützt. Eine solche
Stützrolle läßt sich durch die Deckelöffnung des Mantels 2 in den
Innenraum einführen.

Die Bördelverbindung wird dadurch vollendet, daß nach Fig. 3 der
Rand 8 der Bodenplatte zusammen mit der umgefalteten Endleiste 11
nach innen umgelegt wird, so daß der Rand 8 um 180° umgebogen ist.
Die Endleiste 11 des Mantels 2 wird in dem durch den umgebogenen Rand
8 gebildeten Schlitz 9 eingeklemmt. Ein Streifen 10 des Mantels ist
nach Abschluß dieses Bördelvorganges um 90° nach innen über den Rand
8 des Mantels umgebogen. Die Bördelverbindung läßt sich dicht herstellen, indem am Innenrand der Bodenplatte eine Abstützung durch Stützrollen bei der Fügung der Bördelnaht erfolgt.

Die Bördelverbindung nach der Erfindung ist durch die doppellagige Umfaltung in bekannter Weise dicht. Der Mantel 2 geht bis zum
Unterrand glatt und ununterbrochen durch, so daß der Kessel 1 eine
glatte und ununterbrochene Ansicht hat. Infolgedessen hat der Kessel
ein gutes optisches Aussehen. Die auf der Unterseite der Bodenplatte
3 liegende Bördelnaht ist nicht störend. Eine Verletzungsgefahr an
der Bördelnaht ist ausgeschlossen, weil dieselbe auf der Fläche der
Bodenplatte liegt. Auch Schmutzteile können sich dort kaum ansammeln,
weil der Rand des Mantels 2 glatt durchgeht.

Haßler, Werner, Dr.

Patentanwalt

Asenberg 62

D-5880 Lüdenscheid (DE)

**0184199**

30. September 1985

A 85 132

Anmelder: Vandaele, Stephan

Zeedijk het Zoute 843, Bus 22

B-8300 Knokke-Heist (BE)

## Wasserkessel

## Patentanspruch

Wasserkessel mit einer Bodenplatte und einem Mantel, dessen Unterrand zusammen mit dem Rand der Bodenplatte eine Bördelverbindung bildet, dadurch gekennzeichnet, daß der Unterrand (7) des Mantels (2) mit einem etwa um 90° umgebogenen Streifen (10) über den um 180° umgebogenen Rand (8) der Bodenplatte (3) greift und mit seiner weiter um 180° umgebogenen Endleiste (11) in dem durch den umgebogenen Rand (8) der Bodenplatte (3) gebildeten Schlitz (9) liegt.

Λ|Λ

5

4

1

2

6

**Fig.1**

3

2

8

111

7

11

**Fig.2**

3

2

9   11

7   10   8

3

**Fig.3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | NL-A- 12 932 (WOLTERBEEK) <br> * Insgesamt * & NL - C - 7044 (N.V. NEDERLANDSCHE EMAILLEFABRIEKEN) | 1 | A 47 J 27/00 <br> A 47 J 27/21 <br> B 21 D 51/34 |
| | --- | | |
| X | GB-A-2 031 768 (METAL BOX LTD.) <br> * Figur 2 * | 1 | |
| | --- | | |
| X | DE-C- 224 067 (QUITMANN) <br> * Figur 2 * | 1 | |
| | --- | | |
| A | FR-A- 349 769 (JACQUART) <br> * Figuren 4-7 * | 1 | |
| | --- | | |
| A | US-A-1 508 499 (BERRY) <br> * Figur 4 * | 1 | |
| | --- | | RECHERCHIERTE SACHGEBIETE (Int Cl 4) |
| A | GB-A- 510 370 (CROWN CORK & SEAL CO.) <br> * Figuren 25-30 * | 1 | A 47 J <br> B 21 D |
| | --- | | |
| A | GB-A- 602 563 (WILLLIAMS) <br> * Figuren 2,3 * | 1 | |
| | --- | | |
| D,A | DE-U-6 906 348 (ALU-WERK H. BERNDES) | | |
| | ----- | | |

Der vorliegende Recherchenbericht wurde für alle Patentansprüche erstellt

| Recherchenort <br> DEN HAAG | Abschlußdatum der Recherche <br> 25-02-1986 | Prüfer <br> SCHARTZ J. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82